# EUROPÄISCHE PATENTSCHRIFT

(11) **EP 0 592 838 B1**
(45) Veröffentlichungstag und Bekanntmachung des Hinweises auf die Patenterteilung: **17.09.1997**
(21) Anmeldenummer: 93114982.7
(22) Anmeldetag: 17.09.1993
(51) Int. Cl.: C09B 49/00, C09B 69/04, C09D 11/00

(54) **Wasserlösliche Schwefelfarbstoffe, ihre Herstellung und Verwendung**
Water-soluble sulphur dyes, their preparation and use
Colorants au soufre solubles dans l'eau, leur préparation et leur utilisation

(30) Priorität: 10.10.1992 DE 4234222
(43) Veröffentlichungstag der Anmeldung: 20.04.1994
(73) Patentinhaber: HOECHST AKTIENGESELLSCHAFT, 65926 Frankfurt am Main (DE)
(72) Erfinder: Bauer, Wolfgang, Dr., D-63477 Maintal (DE); Nagl, Gert, Dr., D-61138 Niederdorfelden (DE); Steckelberg, Willi, Dr., D-65719 Hofheim (DE); Ritter, Josef, Dr., D-65812 Bad Soden (DE); Mauelshagen, Wilhelm, D-65520 Bad Camberg (DE)

(56) Entgegenhaltungen:
- EP-A- 0 063 208
- EP-A- 0 274 216

## Beschreibung

Die vorliegende Erfindung betrifft schwarze wasserlösliche Schwefelfarbstoffe der Formel I 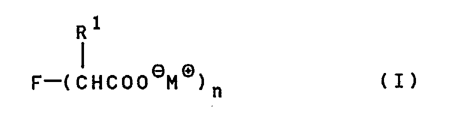 worin
F den Farbstoffchromophor von C.I. Sulphur oder Leuco Sulphur Black 1, C.I. No.53185; C.I. Sulphur oder Leuco Sulphur Black 2, C.I. No.53195; C.I. Sulphur oder Leuco Sulphur Black 5, C.I. No. 53205; C.I. Sulphur Black 6, C.I. No. 53295; C.I. Sulphur Black 7, C.I. No. 53300; C.I. Sulphur oder Leuco Sulphur Black 10, C.I. No. 53190; C.I. Sulphur Black 11, C.I. No. 53290, oder C.I. Sulphur oder Leuco Sulphur Black 12, C.I. No.53200,
R¹ Wasserstoff oder (C₁-C₄)Alkyl,
M^{⊕} ein Alkalimetallkation und/oder ein Ammoniumkation der Formel II 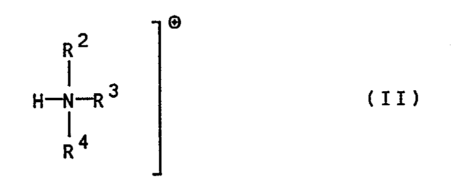
R², R³, R⁴ Wasserstoff, (C₁-C₄)Alkyl, (C₂-C₄)Alkenyl, 2-Hydroxypropyl, 3-Hydroxypropyl, 2,3-Dihydroxypropyl, -(CH₂CH₂NH)ₚ-CH₂CH₂NH₂, -(CH₂CH₂O)ₘ-R⁵, 2-Aminoethyl, 2-Aminopropyl, 3-Aminopropyl, oder 2 oder 3 der Reste R², R³, R⁴ zusammen mit dem Stickstoffatom, an das sie gebunden sind, einen heterocyclischen Ring bilden, der auch noch weitere Heteroatome oder Heteroatomgruppierungen enthalten kann,
R⁵ Wasserstoff oder (C₁-C₄)Alkyl,
p eine Zahl von 1 bis 10,
m eine Zahl von 1 bis 10 und
n eine so große Zahl bedeuten, daß der Farbstoff I 5 bis 20 Gew.% COO^{⊖}-Gruppen enthält.

Die Erfindung betrifft auch ein Verfahren zur Herstellung der erfindungsgemäßen Schwefelfarbstoffe der Formel I und ihre Verwendung sowie eine Aufzeichnungsflüssigkeit.

Die Reste R¹ bis R⁵ können gleich oder verschieden sein. Die für R¹ bis R⁵ stehenden Alkylreste und die für R² bis R⁴ stehenden Alkenylreste können geradkettig oder verzweigt sein.

Als Alkylreste für R¹ sind Methyl und Ethyl bevorzugt.

Als Alkalimetallkationen für M^{⊕} kommen insbesondere Li^{⊕}, Na^{⊕} und K^{⊕}, besonders bevorzugt Na^{⊕} , in Betracht. In einem erfindungsgemäßen Farbstoff I kann M^{⊕} ein einziges Kation aus der Reihe der Alkalimetallkationen oder dem Ammoniumkation der Formel II oder aber ein Gemisch dieser Kationen darstellen. In einem erfindungsgemäßen Farbstoff der Formel I können auch verschiedene Ammoniumkationen der Formel II und/oder verschiedene Reste R¹ vorhanden sein.

Falls in dem Kation der Formel II einer der Reste R², R³ oder R⁴ Wasserstoff und die beiden anderen Reste Alkyl bedeuten, dann sind für die beiden Alkylreste Methyl und Ethyl bevorzugt.

Wenn 2 oder 3 der Reste R² bis R⁴ zusammen mit dem Stickstoff, an den sie gebunden sind, einen heterocyclischen Ring bilden, dann kann der heterocyclische Ring gesättigt, ungesättigt oder aromatisch sein und kann neben dem Atom X auch noch andere Heteroatome, wie z.B. -O-, -N= oder Heteroatomgruppierungen, wie -NH-, -N(Alkyl), insbesondere -N((C₁-C₄Alkyl)- enthalten, sowie einen ankondensierten Ring besitzen. Der heterocyclische Ring ist insbesondere ein 5- oder 6-gliedriger Ring, gegebenenfalls mit einem ankondensierten aromatischen 6-Ring.

Bevorzugte erfindungsgemäße Farbstoffe der Formel I weisen einen Gehalt von 7 bis 15 Gew.% -COO^{⊖}-Gruppen auf.

Besonders bevorzugte erfindungsgemäße Farbstoffe der Formel I besitzen als F den Farbstoffchromophor von C.I. Leuco Sulphur Black 1.

Die erfindungsgemäßen Farbstoffe der allgemeinen Formel I, die einheitliche oder gemischte Kationen der genannten Art aufweisen können, lassen sich dadurch herstellen, daß ein Schwefelfarbstoff der Formel III, worin F^{⊖} den Farbstoffchromophor von CI Sulphur Black 1, 2, 5, 6, 7, 10, 11 oder 12 in der Leukoform bedeutet, im alkalischen Medium mit einer α-Halogencarbonsäure der Formel IV oder ihrem Alkalisalz umgesetzt wird, wobei folgende Reaktion abläuft:

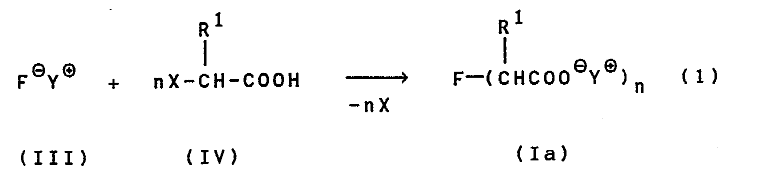

Dabei bedeuten
Y^{⊕} ein Alkalimetallkation, vorzugsweise Na^{⊕},
X Chlor oder Brom und
R¹ und n haben die bereits genannten Bedeutungen.

Die Reaktion wird normalerweise im wäßrigen Medium bei pH-Werten von 7 bis 14, vorzugsweise 9 bis 11, und Temperaturen von 30 bis 120°C, vorzugsweise 40 bis 100°C durchgeführt.

Bei der Reaktion kann auch ein Gemisch verschiedener Farbstoffe der Formel III und/oder ein Gemisch verschiedener α-Halogencarbonsäuren der Formel IV und/oder ihrer Alkalisalze eingesetzt werden.

Die Leucofarbstoffe der Formel III sind bekannt. Bei der Synthese des Leuco-Schwefelfarbstoffs C.I. Leuco Sulphur Black 1, C.I. No. 53185 wird 2,4-Dinitrophenol oder dessen Natriumsalz (das in situ durch alkalische Hydrolyse von 1-Chlor-2,4-dinitrobenzol hergestellt werden kann) z.B. mit Natriumpolysulfid in wäßriger Lösung bei 110 bis 120°C für 48 bis 72 Stunden unter Rückfluß erhitzt (vgl. z.B. Colour Index, Third Edition, Volume 4 (1971), S.4485, und die dort zitierte Literatur).

Die Leucoschwefelfarbstoffe
C.I. Leuco Sulphur Black 2, C.I. No. 53195,
C.I. Leuco Sulphur Black 5, C.I. No. 53205,
C.I. Leuco Sulphur Black 10, C.I. No. 53190 und
C.I. Leuco Sulphur Black 12, C.I. No. 53200
werden ähnlich wie C.I. Leuco Sulphur Black 1 hergestellt. Dabei werden anstelle von 2,4-Dinitrophenol eingesetzt:
bei C.I. Leuco Sulphur Black 2: ein Gemisch von 2,4-Dinitrophenol mit Pikrinsäure oder Pikraminsäure;
bei C.I. Leuco Sulphur Black 5: Pikrinsäure oder Pikraminsäure;
bei C.I. Leuco Sulphur Black 10: ein Gemisch aus 2,4-Dinitrophenol und p-Aminophenol;
bei C.I. Leuco Sulphur Black 12: ein Gemisch aus 2,4-Dinitrophenol und p-(2,4-Dinitro-anilino)-phenol,
(vgl. z.B. Colour Index, loc.cit. Seiten 4485 und 4486 und die dort zitierte Literatur).

Bei der Herstellung von C.I. Leuco Sulphur Black 11, C.I. No. 53290, wird p-2-Naphthylaminophenol, neben geringen Mengen Phenol und 4,4'-Iminodiphenol, in einer Lösung von Natriumpolysulfid in Butanol 30 Stunden am Rückfluß bei 108°C erhitzt (vgl. z.B. Colour Index loc.cit., S.4490, und die dort zitierte Literatur, insbesondere Bios Final Report No. 983, S.59, 117-129). C.I. Leuco Sulphur Black 6, C.I. No. 53295, C.I. Leuco Sulphur Black 7, C.I. No. 53300, werden ähnlich hergestellt, wobei zusätzlich zu p-2-Naphthylaminophenol bei C.I. Leuco Sulphur Black 6 noch kleine Mengen von p-Nitrophenol und 2,4-Diaminotoluol und bei C.I. Leuco Sulphur Black 7 noch kleine Mengen von p-(3-Carbazolylamino)-phenol und p-Nitrophenol eingesetzt werden (vgl. Colour Index loc.cit., S.4491 und 4490, und die dort zitierte Literatur.)

Die für die Herstellung der erfindungsgemäßen Schwefelfarbstoffe I als Ausgangsprodukte benötigten Leucoschwefelfarbstoffe der Formel III können aber auch aus den Schwefelfarbstoffen C.I. Sulphur Black 1, C.I. No. 53185, C.I. Sulphur Black 2, C.I. No. 53195, C.I. Sulphur Black 5, C.I. No. 53205, C.I. Sulphur Black 6, C.I. No. 53295, C.I. Sulphur Black 7, C.I. No. 53300, C.I. Sulphur Black 10, C.I. No. 53190, C.I. Sulphur Black 11, C.I. No. 52290, C.I. Sulphur Black 12, C.I. No. 53200, durch an sich bekannte Umsetzung mit Reduktionsmitteln, wie z.B. Na₂S und/oder NaHS, und/oder Natriumformaldehydsulfoxylat und/oder Natriumdithionit und/oder Glucose hergestellt werden.

C.I.Leuco Sulphur Black 1 kann auch aus C.I. Solubilized Sulphur Black 1, C.I. No. 53186, mit Reduktionsmitteln erhalten werden (vgl. beispielsweise Rev. Pure Appl. Chem. 12, 72 (1962).

Wenn die als Ausgangsprodukt benötigten Leucoschwefelfarbstoffe der Formel III durch Reduktion der entsprechenden Schwefelfarbstoffe hergestellt werden, dann kann die Reaktion (1) auch gleichzeitig mit der Reduktion durchgeführt werden.

Die Struktur der Leucoschwefelfarbstoffe der Formel III ist noch nicht im einzelnen bekannt. Vermutlich handelt es sich um ein Gemisch von verschiedenen Farbtoffen. Für das C.I. Leuco Sulphur Black 1 sind die Strukturen V und VI (K.Venkataraman "The Chemistry of Synthetic Dyes", Vol.II, S.1090, (1952)) bzw. VII (F.Gordon und P.Gregory "Organic Chemistry in Color", S.16, Springer Verlag (1983)) vorgeschlagen worden:

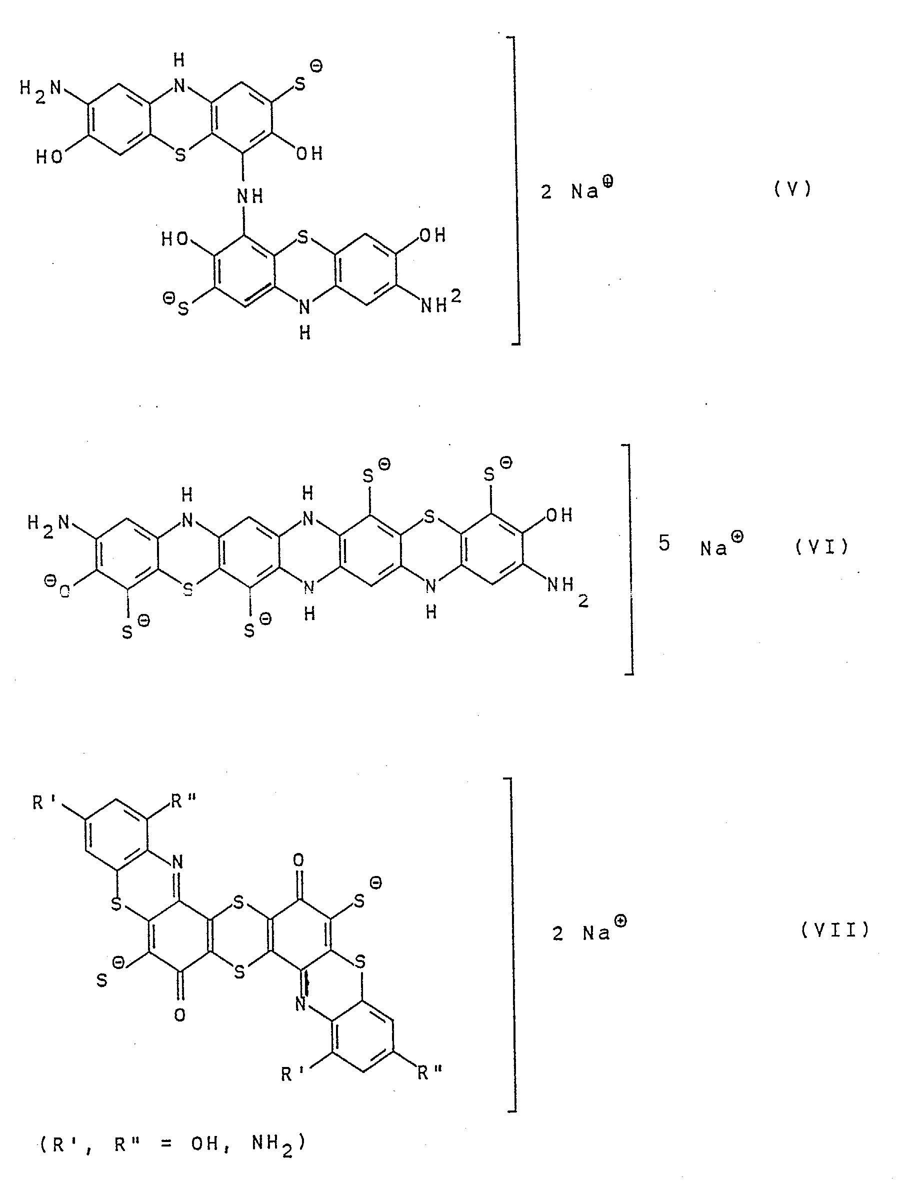

Das bei der Synthese der Leucoschwefelfarbstoffe anfallende Reaktionsgemisch kann, gegebenenfalls nach Verdünnung mit Wasser, direkt bei der Synthese der erfindungsgemäßen Farbstoffe nach (1) eingesetzt werden.

Als a-Halogencarbonsäuren der Formel IV werden bevorzugt verwendet: α-Chlor- oder α-Brom-essigsäure, α-Chlor- oder α-Brom-propionsäure und α-Chlor- oder α-Brom-buttersäure. Die a-Halogencarbonsäuren können auch in Form ihrer Alkalisalze, insbesondere ihrer Natriumsalze, eingesetzt werden.

Da die einzusetzenden Leucoschwefelfarbstoffe der Formel III häufig direkt aus den organischen Ausgangsprodukten, wie 2,4-Dinitrophenol, hergestellt werden, ist es bequem, die bei der Reaktion (1) einzusetzende Menge an α-Halogencarbonsäure der Formel IV oder ihres Alkalisalzes auf das Ausgangsprodukt des Leucoschwefelfarbstoffs, wie z.B. 2,4-Dinitrochlorbenzol, zu beziehen. Bezogen auf 1 Mol dieses bei der Synthese des Leucoschwefelfarbstoffs der Formel III eingesetzten organischen Ausgangsprodukts (das auch ein Gemisch verschiedener organischer Verbindungen darstellen kann) kann die eingesetzte Menge an α-Halogen- carbonsäure oder ihres Alkalisalzes in weiten Grenzen von z.B. 0,4 bis 2 Mol α-Halogencarbonsäure oder ihres Alkalisalzes, vorzugsweise 0,5 bis 1,5 Mol, und ganz besonders bevorzugt 0,6 bis 1,3 Mol, variiert werden.

Die erfindungsgemäßen Farbstoffe fallen bei der Synthese normalerweise als Alkalisalze der Formel la in wäßriger Lösung an, die noch herstellungsbedingte Salze, wie Chloride, Sulfate, Sulfite oder Thiosulfate, insbesondere Natriumchlorid, Natriumsulfat, Natriumsulfit oder Natriumthiosulfat, enthält.

Zur Herstellung von Farbstoffen der Formel Ia in salzfreier Form können diese Salze durch Dialyse oder branfiltration entfernt und die salzfreien Farbstoffe aus den entsalzten wäßrigen Lösungen in üblicher Weise isoliert werden.

Alternativ ist es auch möglich, die erfindungsgemäßen Farbstoffe aus den zunächst erhaltenen wäßrigen Lösungen der Alkalisalze der Formel Ia durch Einstellen von pH-Werten von 0 bis 5, vorzugsweise 2 bis 4, als schwerlösliche Farbstoffsäuren der Formel Ib 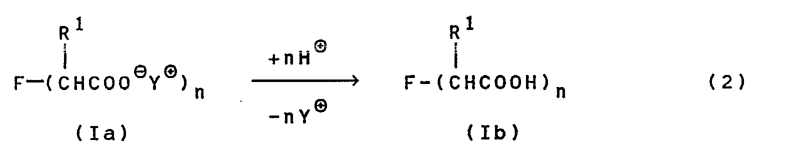 abzuscheiden und in an sich bekannter Weise, z.B. durch Filtration abzutrennen und zu isolieren. Die pH-Einstellung kann hierbei mit einer geeigneten Säure, z.B. mit einer Mineralsäure, wie Salzsäure, Schwefelsäure oder Phosphorsäure, vorgenommen werden.

Aufgrund der Schwerlöslichkeit der Farbstoffsäuren der Formel Ib können die oben genannten anorganischen Salze leicht entfernt und die Produkte Ib in salzfreier Form erhalten werden. Durch anschließende Umsetzung der Farbstoffsäuren der Formel Ib mit einem Alkalimetall-hydroxid und/oder -carbonat und/oder -bicarbonat und/oder einem Amin der Formel VIII 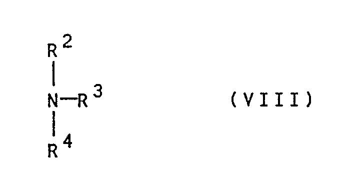 können die erfindungsgemäßen Farbstoffe der Formel I erhalten werden. Diese Umsetzung stellt eine Neutralisation dar und wird normalerweise in Wasser durchgeführt.

Als Alkalimetall-hydroxide, -carbonate oder -bicarbonate werden insbesondere die Hydroxide, Carbonate oder Bicarbonate des Lithiums, Natriums oder Kaliums verwendet. Zur Neutralisation können auch Gemische verschiedener Hydroxide, Carbonate, Bicarbonate und/oder Amine der Formel VIII verwendet werden. Dadurch können die in den erfindungsgemäßen Farbstoffen der Formel I enthaltenen Kationen M^{⊕} breit variiert werden.

Als Amine der Formel VIII eignen sich beispielsweise: Ammoniak, Methylamin, Ethylamin, Propylamin, Isopropylamin, n-Butylamin; Isobutylamin, sek.-Butylamin, tert.-Butylamin, Dimethylamin, Diethylamin, Dipropylamin, Diisopropylamin, Trimethylamin, Triethylamin, Ethanolamin, Diethanolamin, Triethanolamin, Allylamin, aminoethylamin, Diethylaminopropylamin, (Dibutyl)(2-hydroxyethyl)amin, Ethylendiamin, 1,2-Diaminopropan, 1,3-Diaminopropan, 1-Amino-2-hydroxypropan, 1-Amino-2,3-dihydroxypropan, 1-Dimethylamino-2,3-dihydroxypropan, Diethylentriamin, Triethylentetramin, Pyridin, Pyrrolidin, N-Methylpyrrolidin, N-Hydroxyethylpyrrolidin, Piperidin, N-Hydroxyethylpiperidin, Morpholin, N-Hydroxyethylmorpholin.

Für den Fall, daß F in der Formel Ia den Farbstoffchromophor von C.I. Leuco Sulphur Black 6, 7 oder 11 bedeutet, werden bei der Reaktion (1) grünliche bzw. dunkelgrüne Lösungen der Verbindungen Ia erhalten, in denen der in der Leuco-Form vorliegende Farbstoffchromophor F durch Oxidation nach in an sich bekannter Weise in den schwarzen Farbstoffchromophor des C.I. Sulphur Blacks 6, 7 oder 11 überführt werden muß. Für diese Oxidation sind z.B. alle Oxidationsmittel geeignet, die aus der Schwefelfarbstoffherstellung oder der Schwefelfarbstoffärberei für die Überführung eines Schwefelfarbstoffs aus der Leucoform in die eigentliche Farbstofform bekannt sind, so z.B. Brom, Iod, Natriumchlorit, Natriumbromat in schwach saurer Lösung katalysiert durch Vanadat, vorzugsweise aber Wasserstoffperoxid in saurer oder vorzugsweise alkalisch wäßriger Phase. Eine derartige Überführung des Chromophors der Leucoform in die eigentliche Farbstofform ist für den Fall, daß in den Verbindungen Ia F der Farbstoffchromophor von C.I. Leuco Sulphur Black 1, 2, 5, 10 oder 12 darstellt, nicht erforderlich, kann aber gewünschtenfalls durchgeführt werden. Die bevorzugte Oxidation mit Wasserstoffperoxid in wäßriger Phase erfolgt zweckmäßigerweise bei Normaltemperatur oder nur leicht erhöhter Temperatur. Die im Falle der Farbstoffchromophore C.I. Leuco Sulphur Black 6, 7 und 11 durchzuführende und im Falle der anderen Farbstoffchromophore gewünschtenfalls durchzuführende Oxidation kann auch erst nach der Entsalzung durch Dialyse oder Membranfiltration oder nach der Fällung der Farbsäure Ib und deren anschließende Neutralisation zu dem Farbstoff I durchgeführt werden.

Die erfindungsgemäßen schwarzen Farbstoffe der Formel I besitzen eine sehr gute Löslichkeit in Wasser und weisen eine hervorragende Lichtechtheit und Wasserechtheit auf.

Sie sind daher insbesondere zum Färben und Bedrucken von Baumwolle, Polyamid, Papier, Leder und Holz nach den üblichen Verfahren gut geeignet und liefern schwarze Färbungen und Drucke.

Die erfindungsgemäßen Farbstoffe der Formel I sind besonders für die Herstellung von Schreibtinten und zeichnungsflüssigkeiten, insbesondere für das Tintenstrahl- oder Ink-Jet-Druckverfahren geeignet.

Das Tintenstrahl- oder Ink-Jet-Druckverfahrens und die Anforderungen an die hierbei verwendeten Tinten und Aufzeichnungsflüssigkeiten sind z.B. beschrieben in: Kirk-Othmer, Encyclopedia of Chemical Technology, 3rd Edt., Vol.20 (1982), 153-156, und in Ullmann's Encyclopedia of Industrial Chemistry, 5th Edt., Vol. A 13 (1989), 588-594.

Die mit den erfindungsgemäßen Farbstoffen der Formel I herstellbaren Tinten und Aufzeichnungsflüssigkeiten besitzen eine hervorragende Lagerstabilität auch in konzentrierter Form und ausgezeichnete Druckeigenschaften, insbesondere ein gutes Ansprech- und Ausstoßverhalten, gute Tröpfchenbildung und hervorragende Bildeigenschaften, insbesondere hinsichtlich Dichte, Farbton, Kontrast, Wasser-, Licht- und Wetterechtheit.

Eine Tinte für das Tintenstrahldruckverfahren bzw. für das Ink-Jet-Druckverfahren besteht aus einer wäßrigen Lösung eines oder mehrerer Farbstoffe der allgemeinen Formel I. Die Tinte kann auch ein oder mehrere mit Wasser mischbare Lösungsmittel enthalten. Als derartige, mit Wasser mischbare Lösungsmittel kommen insbesondere (C₁-C₄)Alkanole, wie z.B. Methanol, Ethanol, Propanol, Isopropanol, Butanol, sec.Butanol; Amide, wie z.B. Dimethylformamid und Dimethylacetamid; Ketone oder Ketonalkohole, wie z.B. Aceton oder Diacetonalkohol; ferner Glykole und Glykolether, wie z.B. Ethylenglykol, Diethylenglykol, Triethylenglykol, Polyethylenglykol, in Betracht. Die Tinte kann auch noch einen oder mehrere andere Farbstoffe enthalten. Die Tinte kann auch noch einen oder mehrere Hilfsmittel, wie z.B. Biozide, Leitsalze oder Mittel zur Einstellung des elektrischen Widerstands, wie z.B. Lithiumchlorid, Natriumchlorid, Natriumsulfat, Ammoniumchlorid, Korrosionsinhibitoren, Verdicker oder Mittel zur Beeinflussung der Viskosität, wie z.B. Cellulosederivate, Polyvinylalkohol oder wasserlösliche Harze, oberflächenaktive Mittel, wie z.B. kationische, anionische oder nichtionische Tenside, so z.B. Diethanolamin oder Triethanolamin, Mittel zur Einstellung des pH-Werts, insbesondere Puffer, Feuchthaltemittel etc. enthalten.

Die Menge der erfindungsgemäßen Farbstoffe der Formel I in der Tinte richtet sich nach der gewünschten optischen Dichte des Bildes. In der Regel enthält die Tinte 0,5 bis 20 Gew.%, vorzugsweise 0,5 bis 15 Gew.%, eines oder mehrerer wasserlöslicher Schwefelfarbstoffe der Formel I. Normalerweise enthält neben dem Farbstoff und den eventuell vorhandenen Hilfsmitteln die Tinte 10 bis 95 Gew.% Wasser und 0 bis 70 Gew.%, vorzugsweise 0,5 bis 70 Gew.% eines oder mehrerer mit Wasser mischbarer Lösungsmittel.

Zur Herstellung der Tinten oder Aufzeichnungsflüssigkeiten kann ein erfindungsgemäßer Farbstoff der Formel I, insbesondere ein aus C.I. Leuco Sulphur Black 1 hergestellter erfindungsgemäßen Farbstoff, der vorzugsweise einen Gehalt von 7 bis 15 Gew.% -COO^{⊖}-Gruppen aufweist, in Wasser gelöst und evtl. anschließend mit den anderen Komponenten, Lösungsmitteln, Hilfsmitteln etc. versetzt und dann filtriert werden. Auch die bei der Neutralisation der Farbsäuren Ib anfallenden wäßrigen Lösungen der erfindungsgemäßen Farbstoffe I können gegebenenfalls nach Zusatz weiterer Lösungs- und/oder Hilfsmittel und/oder Farbstoffe und Filtration direkt als Tinten oder zeichnungsflüssigkeiten verwendet werden.

### Beispiel 1

769,4 g einer 25%igen, aus 202,6 g 2,4-Dinitrochlorbenzol in bekannter Weise hergestellten Lösung von C.I. Leuco Sulphur Black 1 (vergl. z.B. Fierz-David, Blangey: Grundlegende Operationen der Farbenchemie, 8. Auflage (1952), 329-330) werden mit 500 ml Wasser und bei 60°C mit einer Lösung von 145,6 g Natrium-Monochloracetat in 700 ml Wasser versetzt. Man rührt 2 Stunden bei 60°C nach und gibt zur Fällung der Farbsäure 159,0 g 32%ige wäßrige Salzsäure bis zu einem pH-Wert von 2 zu. Die ausgefallene Farbsäure wird durch Filtration isoliert und mit 3 l Wasser salzfrei gewaschen. Das Produkt wird in 1750 ml entsalztem Wasser angerührt und mit 68 ml 10 N Natronlauge auf pH 8 gestellt. Die erhaltene salzfreie Farbstofflösung wird bei 100°C bis zur Gewichtskonstanz getrocknet.
Ausbeute: 242,6 g schwarzes Pulver, leicht löslich in Wasser.
Absorptionspektrum in Wasser: λₘₐₓ: 610 nm.
COO^{⊖}-Gehalt: 10,5 Gew.%

### Beispiel 2

Verfährt man nach den Angaben des Beispiels 1, setzt jedoch statt einer Lösung von 145,6 g Natrium-Monochloracetat in 700 ml Wasser eine Lösung von 87,4 g Natrium-Monochloracetat in 400 ml Wasser ein, so erhält man 227,3 g eines schwarzen Pulvers, das ebenfalls in Wasser leicht löslich ist.
Absorptionspektrum in Wasser: λₘₐₓ: 615 nm.
COO^{⊖}-Gehalt: 8,3 Gew.%

### Beispiel 3

Das in Beispiel 1 beschriebene Verfahren wird mit einer Lösung von 174,8 g Natrium-Monochloracetat in 800 ml Wasser (statt 145,6 g Natrium-Monochloracetat in 700 ml Wasser) durchgeführt.
Ausbeute: 252,6 g schwarzes Pulver, leicht löslich in Wasser.
Absorptionspektrum in Wasser: λₘₐₓ: 615 nm.
COO^{⊖}-Gehalt: 13,7 Gew.%

### Beispiel 4

Das in Beispiel 1 wiedergegebene Verfahren wird wiederholt, wobei anstelle einer Lösung von 145,6 g Natrium-Monochloracetat in 700 ml Wasser eine Lösung von 163,1 g Natrium-α-chlorpropionat in 800 ml Wasser eingesetzt wird.

Man erhält 263,1 g eines schwarzen Pulvers, leicht löslich in Wasser.
Absorptionspektrum in Wasser: λₘₐₓ: 605 nm.
COO^{⊖}-Gehalt: 9,9 Gew.%

In der folgenden Tabelle sind weitere erfindungsgemäße Farbstoffe der allgemeinen Formel I wiedergegeben, die nach den Angaben des Beispiels 1 hergestellt werden können, wobei in Spalte 2 das zur Neutralisation der Farbsäure verwendete Alkalihydroxid oder Amin der Formel VIII aufgeführt ist.

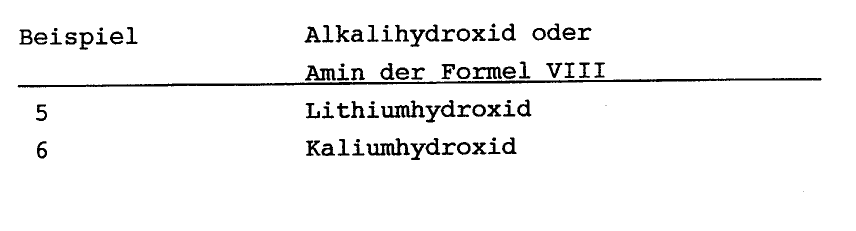

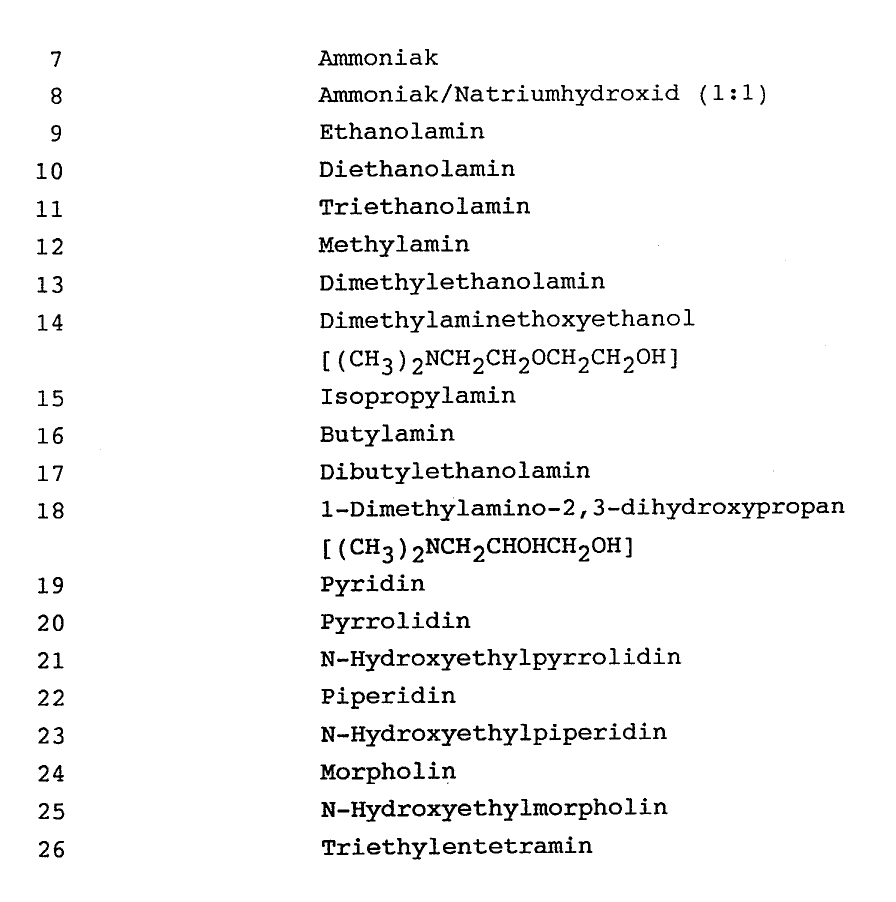

### Beispiel 27

Man verfährt nach den Angaben des Beispiels 1 und versetzt die durch Neutralisation der anfallenden Farbsäure mit 68 ml 10 N Natronlauge in 1750 ml entsalztem Wasser erhaltene Farbstofflösung mit 43,0 g Wasserstoffperoxid 35%ig. Man rührt noch 6 Stunden bei 25 bis 30°C nach, wobei eine Viskositätszunahme und ein Absinken des pH-Werts von 8 auf 6,4 festzustellen ist.

Die Farbstofflösung wird anschließend bei 80°C im Vakuum bis zur Gewichtskonstanz getrocknet.
Ausbeute: 225,1 g schwarzes Pulver
Absorptionspektrum in Wasser: λₘₐₓ: 590 nm.
COO^{⊖}-Gehalt: 10,6 Gew.%.

### Beispiel 28

104 g C.I. Sulphur Black 11 (Herstellung s. Colour Index, Vol.4, 3. Edition (1971); Bios Final Report No. 983, S. 59, 117-129) werden in 1 1 Wasser suspendiert und mit 144 ml 10 N Natronlauge und 62,4 g Schwefelnatrium 60%ig versetzt. Das Reaktionsgemisch wird dann 2 Stunden bei 95 bis 100°C gerührt. Anschließend setzt man eine Lösung von 120,8 g Natrium-monochloracetat in 250 ml Wasser zu und rührt 2 Stunden bei 60°C nach. Die Fällung der Farbsäure erfolgt durch Zugabe von 212 g einer 30%igen Salzsäure bis pH 3. Die ausgefallene Farbsäure wird abfiltriert und mit 2 l Wasser salzfrei gewaschen. Der erhaltene Preßkuchen wird in 800 ml Wasser eingetragen und mit 16 ml 10 N Natronlauge auf pH 7,5 gestellt. Darauf wird die dunkelgrüne Lösung mit 20 g Wasserstoffperoxid 35%ig versetzt, 2 Stunden nachgerührt und die resultierende schwarze Farbstofflösung bei 80°C im Vakuum getrocknet.
Ausbeute: 96,8 g schwarzes Pulver
Absorptionspektrum in Wasser: λₘₐₓ: 570 nm.
COO^{⊖}-Gehalt: 7,4 Gew.%.

## Patentansprüche

1. Wasserlösliche schwarze Schwefelfarbstoffe der Formel I 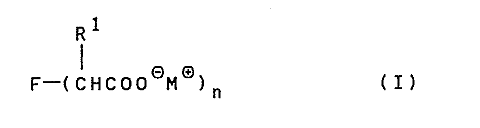 worin
F den Farbstoffchromophor von C.I. Sulphur oder Leuco Sulphur Black 1, C.I. No.53185; C.I. Sulphur oder Leuco Sulphur Black 2, C.I. No.53195; C.I. Sulphur oder Leuco Sulphur Black 5, C.I. No. 53205; C.I. Sulphur Black 6, C.I. No. 53295; C.I. Sulphur Black 7, C.I. No. 53300; C.I. Sulphur oder Leuco Sulphur Black 10, C.I. No. 53190; C.I. Sulphur Black 11, C.I. No. 53290, oder C.I. Sulphur oder Leuco Sulphur Black 12, C.I. No.53200,
R¹ Wasserstoff oder (C₁-C₄)Alkyl,
M^{⊕} ein Alkalimetallkation und/oder ein Ammoniumkation der Formel II 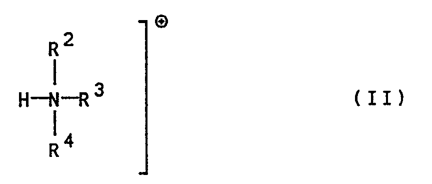
R², R³, R⁴ Wasserstoff, (C₁-C₄)Alkyl, (C₂-C₄)Alkenyl, 2-Hydroxypropyl, 3-Hydroxypropyl, 2,3-Dihydroxypropyl, -(CH₂CH₂NH)ₚ-CH₂CH₂NH₂, -(CH₂CH₂O)ₘ-R⁵, 2-Aminoethyl, 2-Aminopropyl, 3-Aminopropyl, oder 2 oder 3 der Reste R², R³, R⁴ zusammen mit dem Stickstoffatom, an das sie gebunden sind, einen heterocyclischen Ring bilden, der auch noch weitere Heteroatome oder Heteroatomgruppierungen enthalten kann,
R⁵ Wasserstoff oder (C₁-C₄)Alkyl,
p eine Zahl von 1 bis 10,
m eine Zahl von 1 bis 10 und
n eine so große Zahl bedeutet, daß der Farbstoff I 5 bis 20 Gew.% COO^{⊖}-Gruppen enthält.

2. Wasserlösliche Schwefelfarbstoffe nach Anspruch 1, dadurch gekennzeichnet, daß sie sich von dem Farbstoffchromophor von C.I. Leuco Sulphur Black 1 ableiten.

3. Wasserlösliche Schwefelfarbstoffe nach den Ansprüchen 1 und 2, dadurch gekennzeichnet, daß im Farbstoffmolekül 7 bis 15 Gew.% Carboxylgruppen vorliegen.

4. Verfahren zur Herstellung der Schwefelfarbstoffe eines oder mehrerer der Ansprüche 1 bis 3, dadurch gekennzeichnet, daß ein Schwefelfarbstoff der Formel III
F^{⊖} Y^{⊕} (III)
worin
F^{⊖} den Farbstoffchromophor von C.I. Leuco Sulphur Black 1, 2, 5, 6, 7, 10, 11 oder 12 und
Y^{⊕} ein Alkalikation
bedeuten, mit einer α-Halogencarbonsäure der Formel IV 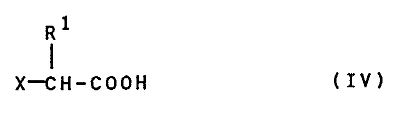 worin
X Chlor oder Brom und
R¹ Wasserstoff oder (C₁-C₄)Alkyl,
bedeuten oder einem ihrer Alkalisalze umgesetzt wird und daß gewünschtenfalls der dabei entstandene Farbstoff der Formel Ia 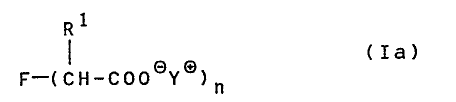 zur Entsalzung dialysiert oder membranfiltriert oder in wäßriger Lösung auf pH-Werte von 0 bis 5 eingestellt und die dabei ausfallenden Farbsäuren der Formel Ib 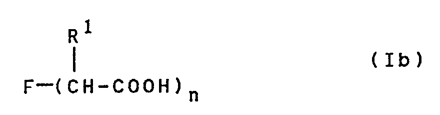 abgetrennt und mit einem Alkalimetallhydroxid, Alkalimetallcarbonat, Alkalimetallbicarbonat und/oder einem Amin der Formel VIII 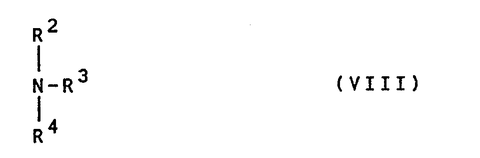 worin
R², R³ und R⁴ die in Anspruch 1 angegebenen Bedeutungen besitzen, zu einem Farbstoff der Formel I umgesetzt wird, wobei für den Fall, daß F in der Formel Ia den Farbstoffchromophor von C.I. Leuco Sulphur Black 6, 7 oder 11 bedeutet, der Farbstoff Ia oder der nach der Fällung der Farbsäure Ib und anschließende Umsetzung mit einem Alkalimetallhydroxid, Alkalimetallcarbonat, Alkalimetallbicarbonat und/oder einem Amin der Formel VIII anfallende Farbstoff I oxidiert wird oder daß für den Fall, daß F in der Formel Ia den Farbstoffchromophor von C.I. Leuco Sulphur Black 1, 2, 5, 10 oder 12 bedeutet, der Farbstoff Ia oder der Farbstoff I gewünschtenfalls oxidiert wird.

5. Verfahren nach Anspruch 4, dadurch gekennzeichnet, daß der Farbstoff C.I. Leuco Sulphur Black 1, C.I. No. 53185, eingesetzt wird.

6. Verwendung der wasserlöslichen Schwefelfarbstoffe der Formel I eines oder mehrerer der Ansprüche 1 bis 3 zum Färben und Bedrucken von Baumwolle, Polyamid, Papier, Holz oder Leder sowie zur Herstellung von Schreibtinten und Aufzeichnungsflüssigkeiten, insbesondere für das Ink-Jet-Verfahren.

7. Aufzeichnungsflüssigkeit, insbesondere für das Tintenstrahl oder Ink-Jet-Druckverfahren, enthaltend in einer wäßrigen Lösung einen Farbstoff I eines oder mehrerer Ansprüche 1 bis 3.

8. Aufzeichnungsflüssigkeit nach Anspruch 7, dadurch gekennzeichnet, daß sie 0,5 bis 20 Gew.%, vorzugsweise 0,5 bis 15 Gew.%, eines Farbstoffs der Formel I enthält.

## Claims

1. Water-soluble black sulphur dyes of the formula I 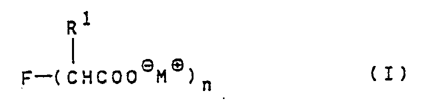 in which
F is the dye chromophore of C.I. Sulphur or Leuco Sulphur Black 1, C.I. No. 53185; C.I. Sulphur or Leuco Sulphur Black 2, C.I. No. 53195; C.I. Sulphur or Leuco Sulphur Black 5, C.I. No. 53205; C.I. Sulphur Black 6, C.I. No. 53295; C.I. Sulphur Black 7, C.I. No. 53300; C.I. Sulphur or Leuco Sulphur Black 10, C.I. No. 53190; C.I. Sulphur Black 11, C.I. No. 53290, or C.I. Sulphur or Leuco Sulphur Black 12, C.I. No. 53200,
R¹ is hydrbgen or (C₁-C₄-)alkyl,
M^{⊕} is an alkali metal cation and/or an ammonium cation of the formula II 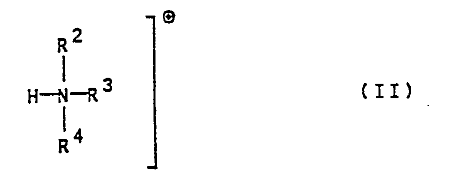
R², R³, R⁴ are hydrogen, (C₁-C₄) alkyl, (C₂-C₄) alkenyl, 2-hydroxypropyl, 3-hydroxypropyl, 2,3-dihydroxypropyl, -(CH₂CH₂NH)ₚ-CH₂CH₂NH₂, -(CH₂CH₂O)ₘ-R⁵, 2-aminoethyl, 2-aminopropyl, 3-aminopropyl, or 2 or 3 of the radicals R², R³, R⁴ together with the nitrogen atom to which they are attached form a heterocyclic ring which additionally may also contain further heteroatoms or heteroatom groupings,
R⁵ is hydrogen or (C₁-C₄)alkyl,
p is a number from 1 to 10,
m is a number from 1 to 10 and
n is such a large number that dye I contains 5 to 20% by weight of COO^{⊖} groups.

2. Water-soluble sulphur dyes according to Claim 1, characterized in that they are derived from the dye chromophore of C.I. Leuco Sulphur Black 1.

3. Water-soluble sulphur dyes according to Claims 1 and 2, characterized in that 7 to 15% by weight of carboxyl groups are present in the dye molecule.

4. Process for preparing the sulphur dyes of one or more of Claims 1 to 3, characterized in that a sulphur dye of the formula III
F^{⊖}Y^{⊕} (III)
in which
F^{⊖} is the dye chromophore of C.I. Leuco Sulphur Black 1, 2, 5, 6, 7, 10, 11 or 12 and
Y^{⊕} is an alkali metal cation
is reacted with an α-halocarboxylic acid of the formula IV 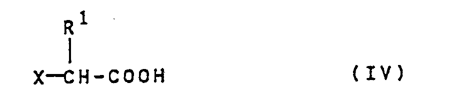 in which
X is chlorine or bromine and
R¹ is hydrogen or (C₁-C₄)alkyl
or an alkali metal salt thereof and in that, if desired, the resulting dye of the formula Ia 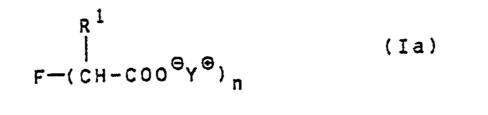 is desalted by dialysis or membrane filtration or is adjusted to a pH of 0 to 5 in aqueous solution, and the dye acids of the formula Ib 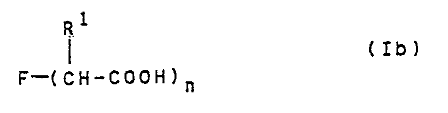 precipitating during this pH adjustment are separated off and reacted with an alkali metal hydroxide, alkali metal carbonate, alkali metal bicarbonate and/or an amine of the formula VIII 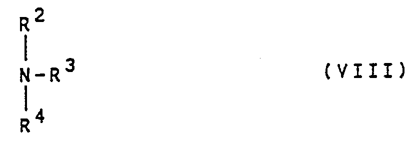 in which
R², R³ and R⁴ have the meanings given in Claim 1 to give a dye of the formula I, the dye Ia or the dye I obtained after precipitation of the dye acid Ib, followed by reaction with an alkali metal hydroxide, alkali metal carbonate, alkali metal bicarbonate and/or an amine of the formula VIII, in the case where F in formula Ia is the dye chromophore of C.I. Leuco Sulphur Black 6, 7 or 11, being oxidized or the dye Ia or the dye I, in the case where F in formula Ia is the dye chromophore of C.I. Leuco Sulphur Black 1, 2, 5, 10 or 12, being, if desired, oxidized.

5. Process according to Claim 4, characterized in that the dye C.I. Leuco Sulphur Black 1, C.I. No. 53185, is used.

6. Use of the water-soluble sulphur dyes of the formula I of one or more of Claims 1 to 3 for dyeing and printing cotton, polyamide, paper, wood or leather and for producing writing inks and recording fluids, in particular for the ink-jet method.

7. Recording fluid, in particular for the ink-jet method, containing a dye I of one or more of Claims 1 to 3 in an aqueous solution.

8. Recording fluid according to Claim 7, characterized in that it contains 0.5 to 20% by weight, preferably 0.5 to 15% by weight, of a dye of the formula I.

## Revendications

1. Colorants au soufre, noirs, solubles dans l'eau, de formule I 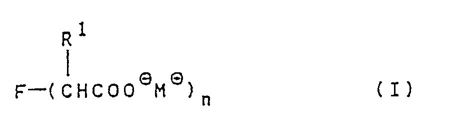 dans laquelle
F est le chromophore des colorants C.I. Sulphur ou Leuco Sulphur Black 1, C.I. N° 53185 ; C.I. Sulphur ou Leuco Sulphur Black 2, C.I. N° 53195 ; C.I. Sulphur ou Leuco Sulphur Black 5, C.I. N° 53205 ; C.I. Sulphur Black 6, C.I. N° 53295 ; C.I. Sulphur Black 7, C.I. N° 53300 ; C.I. Sulphur ou Leuco Sulphur Black 10, C.I. N° 53190 ; C.I. Sulphur Black 11, C.I. N° 53290 ; ou C.I. Sulphur ou Leuco Sulphur Black 12, C.I. N° 53200,
R¹ est un hydrogène ou un groupe alkyle en C₁-C₄,
M⁺ est le cation d'un métal alcalin et/ou un cation ammonium de formule II 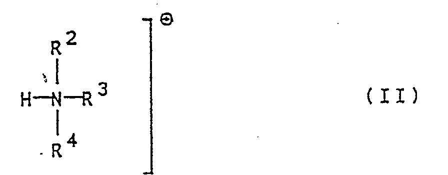
R², R³ et R⁴ sont chacun un hydrogène ou un groupe alkyle en C₁-C₄, alcényle en C₂-C₄, 2-hydroxypropyle, 3-hydroxypropyle, 2,3-dihydroxypropyle, -(CH₂CH₂NH)ₚ- CH₂CH₂NH₂, -(CH₂CH₂O)ₘ-R⁵, 2-aminoéthyle, 2-aminopropyle, 3-amino-propyle, ou encore 2 ou 3 des radicaux R², R³ et R⁴, avec l'atome d'azote auquel ils sont liés, forment un noyau hétérocyclique, qui peut encore contenir d'autres hétéroatomes ou d'autres groupements d'hétéroatomes,
R⁵ est un hydrogène ou un groupe alkyle en C₁-C₄,
p est un nombre de 1 à 10,
m est un nombre de 1 à 10, et
n est un nombre suffisamment grand pour que le colorant I contienne de 5 à 20 % en poids de groupes COO⁻.

2. Colorants au soufre solubles dans l'eau selon la revendication 1, caractérisés en ce qu'ils dérivent du chromophore du colorant C.I. Leuco Sulphur Black 1.

3. Colorants au soufre solubles dans l'eau selon les revendications 1 et 2, caractérisés en ce que la molécule de colorant contient de 7 à 15 % en poids de groupes carboxyle.

4. Procédé de préparation de colorants au soufre selon l'une des revendications 1 à 3, caractérisé en ce qu'on fait réagir un colorant au soufre de formule III
F^{⊖}Y^{⊕} (III)
dans laquelle
F⁻ est le chromophore du colorant C.I. Leuco Sulphur Black 1, 2, 5, 6, 7, 10, 11 ou 12, et
Y⁺ est un cation d'un métal alcalin,
avec un acide α-halogénocarboxylique de formule IV 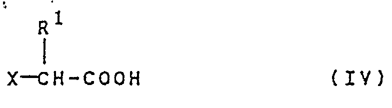 dans laquelle
X est le chlore ou le brome, et
R¹ est un hydrogène ou un groupe alkyle en C₁-C₄,
ou l'un de ses sels d'un métal alcalin, et que l'on soumet éventuellement le colorant de formule la ainsi obtenu 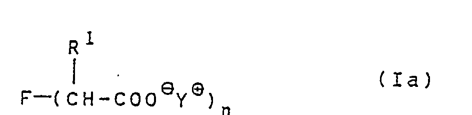 pour assurer une élimination des sels, à une dialyse ou à une filtration sur membrane, ou encore on ajuste son pH en solution aqueuse à une valeur de 0 à 5, et on sépare les acides colorants de formule Ib obtenus à cette occasion 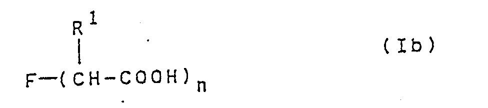 et on le fait réagir avec un hydroxyde d'un métal alcalin, un carbonate d'un métal alcalin, un bicarbonate d'un métal alcalin et/ou une amine de formule VIII 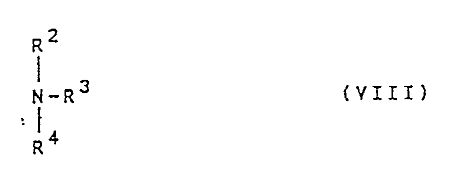 dans laquelle R², R³ et R⁴ ont les significations données dans la revendication 1, pour obtenir un colorant de formule I, auquel cas, quand F de la formule la est le chromophore du colorant C.I. Leuco Sulphur Black 6, 7 ou 11, on oxyde le colorant la, ou encore le colorant I qui est obtenu après précipitation de l'acide colorant Ib, suivie d'une réaction avec un hydroxyde d'un métal alcalin, un carbonate d'un métal alcalin, un bicarbonate d'un métal alcalin et/ou une amine de formule VIII, ou encore, dans le cas dans lequel F de la formule la représente le chromophore du colorant C.I. Leuco Sulphur Black 1, 2, 5, 10 ou 12, on oxyde éventuellement le colorant la ou le colorant I.

5. Procédé selon la revendication 4, caractérisé en ce qu'on utilise le colorant C.I. Leuco Sulphur Black 1, C.I. N° 53185.

6. Utilisation des colorants au soufre de formule I solubles dans l'eau selon l'une ou plusieurs des revendications 1 à 3 pour teindre et imprimer du coton, du polyamide, du papier, du bois ou du cuir, ou pour fabriquer des encres d'écriture et des liquides d'enregistrement, en particulier pour le procédé au jet d'encre.

7. Liquide d'enregistrement, en particulier pour le procédé d'impression au jet d'encre, contenant dans une solution aqueuse un colorant I selon l'une ou plusieurs des revendications 1 à 3.

8. Liquide d'enregistrement selon la revendication 7, caractérisé en ce qu'il contient de 0,5 à 20 % en poids et de préférence de 0,5 à 15 % en poids d'un colorant de formule I.
